# EUROPEAN PATENT SPECIFICATION

(11) **EP 2 289 781 B1**
(45) Date of publication and mention of the grant of the patent: **06.03.2013**
(21) Application number: 10174279.9
(22) Date of filing: 27.08.2010
(51) Int. Cl.: B62J 6/02

(54) **Motorcycle head light device**
Motorrad-Scheinwerfervorrichtung
Dispositif d'éclairage de motocyclette

(30) Priority: 31.08.2009 JP 2009200505
(43) Date of publication of application: 02.03.2011
(73) Proprietor: Honda Motor Co., Ltd., Tokyo 107-8556 (JP)
(72) Inventor: Nishijima, Hiroshi, Saitama 351-0193 (JP); Ota, Hiroyasu, Saitama 351-0193 (JP); Ohashi, Hayato, Saitama 351-0193 (JP); Ashihara, Eiji, Tokyo 105-6024 (JP)
(74) Representative: Beder, Jens

(56) References cited:
- EP-A1- 1 479 563
- EP-A1- 2 050 665
- US-A1- 2006 193 143

## Description

This invention relates to a motorcycle head light device.

As a conventional vehicle head light device, a device provided with an extension covering a position in front of a position light bulb, in which direct light and reflection light of the position light bulb is guided from a gap between the extension and a reflector to a reflecting surface of the reflector, is known (for example, see JP-A No. H11-329014).

EP 2 050 665 A1 discloses a straddle-type vehicle comprising: a body frame; a front fork turnably supported at a front portion of the body frame, said front fork including a left fork body and a right fork body, which support a front wheel, and an upper bracket and a lower bracket, which connect the left fork body and the right fork body; and a headlight device mounted to the front fork, the headlight device including a light body and a holding member that holds the light body, wherein the holding member is mounted directly to the upper bracket and/or the lower bracket.

US 2006/193143 A1 discloses a headlight assembly for a straddle-type vehicle (e.g., a motor scooter) is provided that is positioned lower to the ground and farther forward than typical headlights to provide enhanced illumination from a front end of the vehicle. The assembly comprises a front portion of a vehicle body cover that extends over a portion of the front wheel of the vehicle. A headlight assembly is disposed at least partially on a front end of the front portion of the vehicle body cover. The headlight assembly comprises an upper light for generating a low beam of light and a lower light for generating a high beam of light. In addition, the headlight comprises position lights disposed on the right side and the left side of the upper and lower lights. Preferably, at least a portion of the headlight assembly is positioned farther forward than a leading end of the front wheel of the vehicle.

EP 1 479 563 A1, accordingy to the preamble of claim 1, discloses a vehicle light comprising a body case being fixable to a vehicle and a lens provided at one side of the body case. The invention of EP 1 479 563 A1 aims to improve a vehicle headlight of the known kind. Therefore, the invention provides a headlight wherein an intermediate case member is interposed between the body case and the lens, the intermediate case member having an outer periphery exposed to an outside of the vehicle light.

[0003] In the meanwhile, in the vehicle head light device in the above-described JP-A No. H11-329014, the position light bulb cannot be directly seen from the outside, however, as a reflector of a head light bulb which is also used as the reflector of the position light bulb is used for reflection of bulb light, it is difficult to distinguish the outer appearance upon turning-on of the head light from that upon turning-on of the position light. That is, it is difficult to produce a different view of the position light from the head light.

The present invention has been made in consideration of the above situation, and has its object to provide a motorcycle head light device in which the position light bulb cannot be directly seen from the outside, thereby the outer appearance of the motorcycle head light device upon turning-on and turning-off of the position light can be improved, and a distinction between the outer appearance upon turning-on of the head light and that upon turning-on of the position light can be easily made, and further, the outer appearance upon turning-on of the position light can be arbitrarily set, thereby the outer appearance of the motorcycle head light device, especially, the outer appearance upon turning-on of the position light can be improved.

To attain the above object, a first feature of the present invention is characterized in a motorcycle head light device comprising: a head light bulb; a position light bulb provided around the head light bulb; a reflector that reflects bulb light of the head light bulb; and an extension covering the perimeter of the reflector, wherein the extension covers a position in front of the position light bulb, and wherein the extension is provided with openings and reflection members that guide the bulb light of the position light bulb to the outside.

A second feature of the present invention is **characterized in that**, in addition to the first feature, the position light bulb is provided above the head light bulb, and the extension is provided with a front eaves that covers the position in front of the position light bulb, further, an upper transparent member having the opening and the reflection member that guide the bulb light of the position light bulb to the outside is provided below the front eaves.

A third feature of the present invention is **characterized in that**, in addition to the second feature, the front eaves is formed at a one-step lower level than the surface of the extension.

A fourth feature of the present invention is **characterized in that**, in addition to the first feature, side transparent members having the openings and the reflection members that guide the bulb light of the position light bulb to the outside are provided on the sides of the front eaves.

A fifth feature of the present invention is **characterized in that**, in addition to the fourth feature, the side transparent members are concave members having an approximate triangular shape in a front view, and the reflection members of the side transparent members have inwardly curved upper and lower surfaces.

A sixth feature of the present invention is **characterized in that**, in addition to the fourth feature, the side transparent members are provided in a plurality of positions on one side of the extension in a circumferential direction with the head light bulb as a center.

A seventh feature of the present invention is **characterized in that**, in addition to the first feature, the extension has an upper extension covering a position above the reflector and a side extension extending downward from a side of the upper extension.

An eighth feature of the present invention is **characterized in that**, in addition to the first feature, the position light bulb and the extension are attached to the head light housing, and wherein the head light bulb is attached to the reflector, further wherein the reflector is swingably supported with the head light housing.

According to the motorcycle head light device in the first feature, as the position in front of the position light bulb is covered with the extension, and the extension is provided with the openings and the reflection members to guide the bulb light of the position light bulb to the outside, the position light bulb cannot be directly seen from the outside, thereby the outer appearance of the motorcycle head light device upon turning on and turning off of the position light can be improved, and a distinction between the outer appearance upon turning-on of the head light and that upon turning-on of the position light can be easily made. Further, as the openings and the reflection members can be provided in arbitrary positions of the extension, the outer appearance upon turning-on of the position light can be arbitrarily set, and the outer appearance of motorcycle head light device upon turning-on of the position light can be improved.

According to the motorcycle head light device in the second feature, as the position light bulb is provided above the head light bulb, the extension is provided with a front eaves covering the position in front of the position light bulb, and the upper transparent member having the opening and the reflection member to guide the bulb light of the position light bulb to the outside is provided below the front eaves, the position light bulb cannot be directly seen from the outside, thereby the outer appearance of the motorcycle head light device upon turning-on and turning-off of the position light can be improved, and a distinction between the outer appearance upon turning-on of the head light and that upon turning-on of the position light can be easily made. Further, as the upper transparent member can be provided in an arbitrary position of the extension,
the outer appearance upon turning-on of the position light can be arbitrarily set, and the outer appearance of the motorcycle head light device upon turning-on of the position light can be improved.

According to the motorcycle head light device in the third feature, as the front eaves is formed at a one-step lower level than the surface of the extension, transmission of the heat of the position light bulb via the front eaves to a lens can be suppressed.

According to the motorcycle head light device in the fourth feature, as the side transparent members having openings and reflection members to guide the bulb light of the position light bulb to the outside are provided on the sides of the front eaves, it seems like plural position lights exist, and the outer appearance of the motorcycle can be improved.

According to the motorcycle head light device in the fifth feature, as the side transparent members are concave members having an approximate triangular shape in a front view, and the reflection members of the side transparent member have inwardly curved upper and lower surfaces, the bulb light of the position light bulb can be efficiently reflected, and the outer appearance of the motorcycle can be improved.

According to the motorcycle head light device in the sixth feature, as the side transparent members are provided in plural positions on one side of the extension in a circumferential direction with the head light bulb as a center, it seems like plural position lights exist, and the outer appearance of the motorcycle can be improved.

According to the motorcycle head light device in the seventh feature, as the extension has the upper extension covering the position above the reflector and the side extension extending downward from the side of the upper extension, the perimeter of the reflector can be efficiently covered.

According to the motorcycle head light device in the eighth feature, as the position light bulb and the extension are attached to the head light housing, the head light bulb is attached to the reflector, and the reflector is swingably supported with the head light housing, the optical axis of the head light bulb can be adjusted.
Fig. 1 is a left side view for explaining a motorcycle where an example of a head light device according to the present invention is mounted.
Fig. 2 is a front view of the head light device shown in Fig. 1.
Fig. 3 is a perspective view showing the head light device shown in Fig. 2 where a side cover is removed.
Fig. 4 is a front view of the head light device shown in Fig. 3 where an extension is removed.
Fig. 5 is a cross-sectional view along an A-A arrow line in Fig. 2.
Fig. 6 is a cross-sectional view along an B-B arrow line in Fig. 2.

Hereinbelow, an example of a motorcycle head light device according to the present invention will be described in detail with reference to the drawings. Note that the drawings are viewed along the direction of reference numerals, and in the following description, front and rear positions, left and right positions, and upper and lower positions are denoted by, as the front position in the vehicle, Fr, the rear position, Rr, the left side position, L, the right side position, R, the upper position, U, and the lower position, D, in accordance with the direction viewed from a rider.

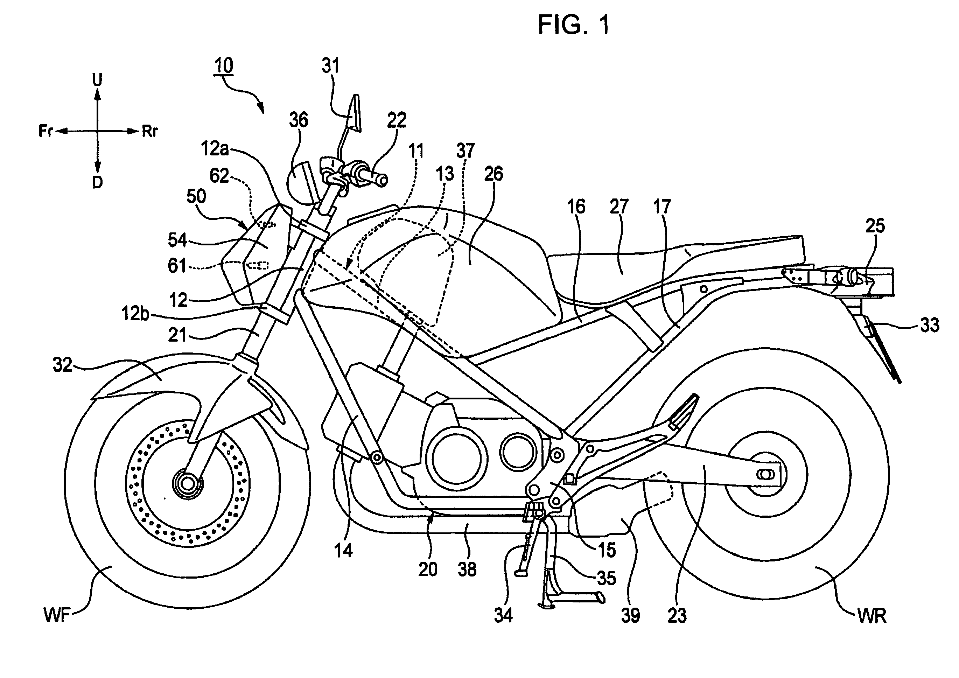

As shown in Fig. 1, a motorcycle 10 in the present example is a naked type motorcycle without cowl around its head light. A vehicle body frame 11 has a head pipe 12 provided at a front end, a pair of left and right main frames 13 extending rearward and downward from the head pipe 12, a pair of left and right down frames 14 extending downward and rearward from the head pipe 12, a pair of left and right pivot plates 15 connected to rear ends of the pair of left and right main frames 13 and the pair of left and right down frames 14, a pair of left and right rear frames 16 connected to an intermediate portion of the pair of left and right main frames 13 and extending rearward, and a pair of left and right reinforcing frames 17 connected to upper ends of the pair of left and right pivot plates 15 and extending rearward. An engine 20 is attached to the main frames 13, the down frames 14 and the pivot plates 15.

Further, the motorcycle 10 has a pair of left and right front forks 21 steerably supported with the head pipe 12 via an upper bridge 12a and a lower bridge 12b, a front wheel WF turnably supported with lower ends of the front forks 21, a steering handlebar 22 attached to the upper bridge 12a at upper ends of the front forks 21, a head light device 50 attached to the upper and lower bridges 12a and 12b via a stay (not shown) in front of and above the front forks 21, swing arms 23 swingably supported with the pivot plates 15, a rear wheel WR turnably supported with rear ends of the swing arms 23, a tail light device 25 attached to rear ends of the rear frames 16, a fuel tank 26 attached above the main frames 13, and a seat 27 attached behind the fuel tank 26 and above the rear frames 16. Note that in Fig. 1, reference numeral 31 denotes a side mirror; 32, a front fender; 33, a rear fender; 34, a side stand; 35, a main stand; 36, a meter; 37, an air cleaner; 38, an exhaust pipe; and 39, a muffler.

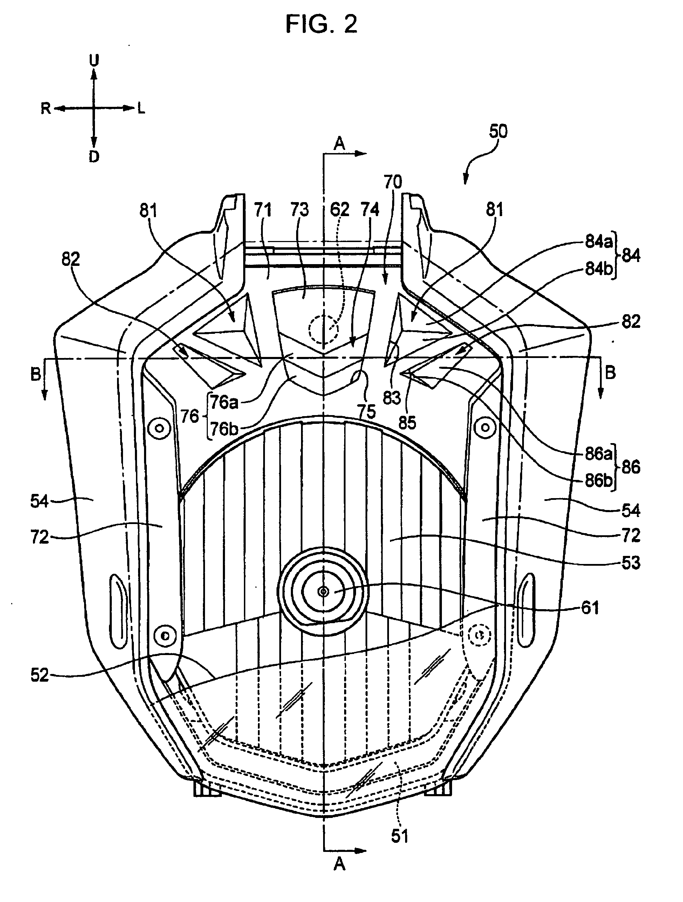

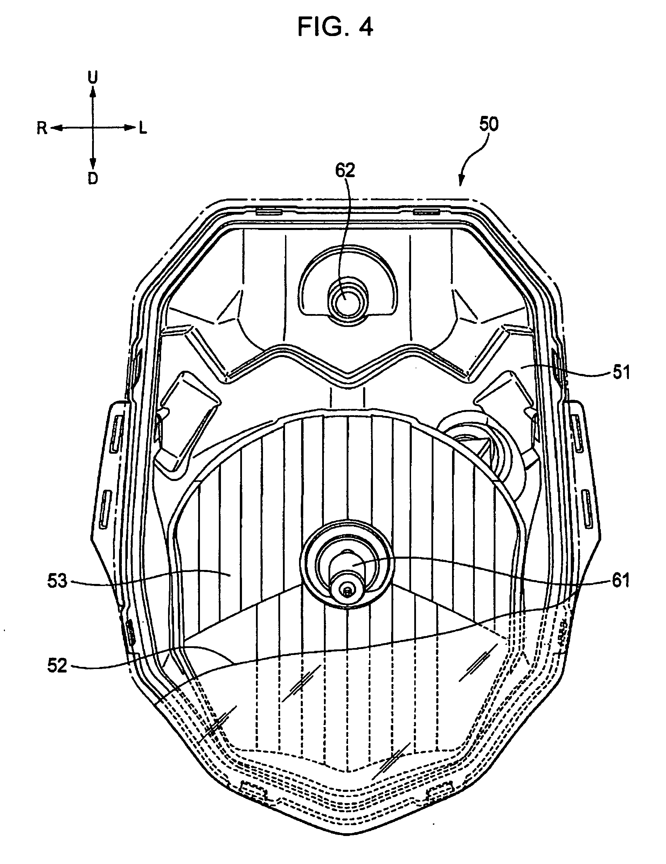

As shown in Figs. 2 to 6, the head light device 50 has a head light housing 51 attached via the stay (not shown) to the upper and lower bridges 12a and 12b on the front fork 21 side, a lens 52 provided so as to close the entire front opening of the head light housing 51, a reflector 53 provided between the head light housing 51 and the lens 52 to reflect bulb light of the head light bulb 61, an extension 70 provided between the head light housing 51 and the lens 52, covering a position above the reflector 53 and left and right sides of the reflector 53, and a pair of left and right side covers 54 covering external side surfaces of the head light housing 51. Note that in Figs. 2 and 4, the upper part of the lens 52 is cut away, however, the lens 52 covers the entire part, from the top to the bottom of the head light housing 51.

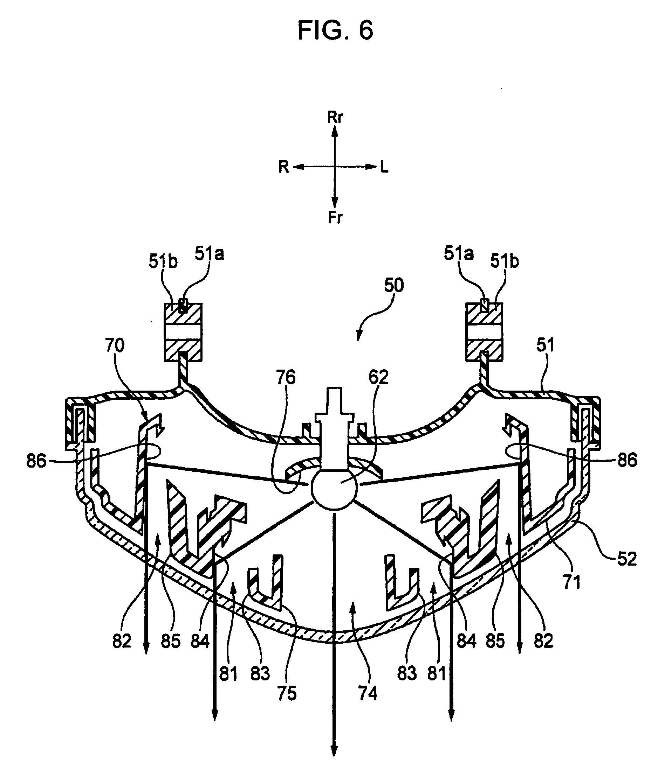

Further, as shown in Fig. 6, head light attachment members 51a attached to the stay (not shown) of the upper and lower bridges 12a and 12b on the front fork 21 side are respectively formed in left and right positions in a rear surface of the head light housing 51. An elastic member 51b is provided between the head light attachment members 51a and the stay (not shown).

As shown in Figs. 4 to 6, the reflector 53 has a concave curve facing frontward, as a reflecting surface, and a head light bulb 61 is attached to the approximately central position of the concave curve. Further, the reflector 53 is swingably supported by an aiming device 55 with the head light housing 51.

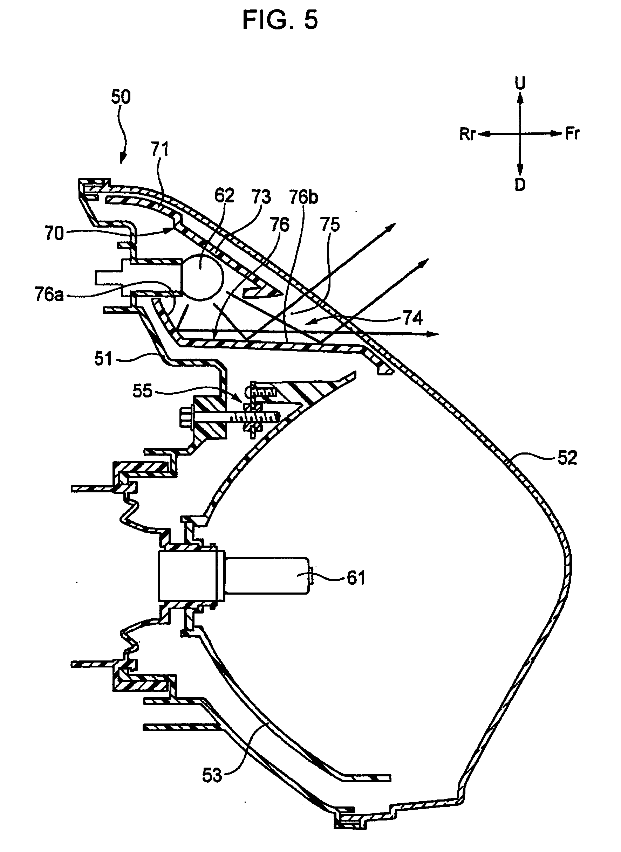

Then, in the present example, as shown in Figs. 4 and 5, a position light bulb 62 is provided above the head light bulb 61. The position light bulb 62 is attached to the head light housing 51.

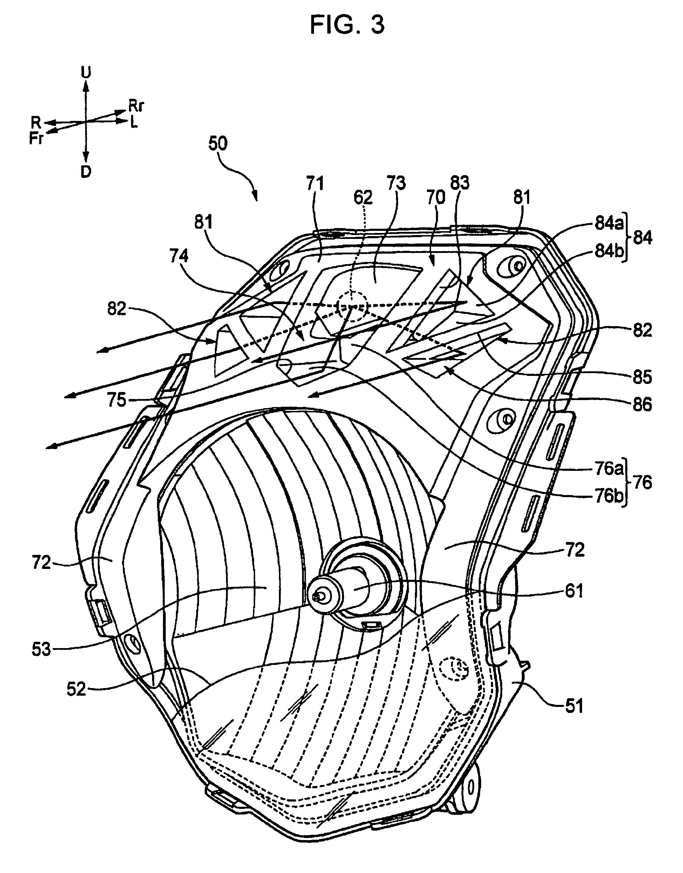

As shown in Figs. 2 and 3, the extension 70, having an upper extension 71 covering a position above the reflector 53 and side extensions 72 extending downward from both left and right sides of the upper extension 71, covering left and right sides of the reflector 53, and extending to a position below the head light bulb 61, is attached to the head light housing 51.

As shown in Figs. 2, 3, 5 and 6, a front eaves 73 covering a position in front of the position light bulb 62, an upper transparent member 74 provided below the front eaves 73, to guide bulb light of the position light bulb 62 to the outside, a first side transparent member 81 and a second side transparent member 82 arrayed on the both left and right sides of the front eaves 73 and in a circumferential direction with the head light bulb 61 as a center, to guide the bulb light of the position light bulb 62 to the outside, are formed in the upper extension 71.

As shown in Figs. 3 and 5, the front eaves 73 is a plate member having an approximate home-base shape in a front view formed at a one-step lower level than the surface of the upper extension 71. With this front eaves 73, the position light bulb 62 cannot be directly seen from the outside.

As shown in Figs. 2, 3, 5 and 6, the upper transparent member 74 has an opening 75 having an approximate V-shape in a front view, formed adjacently to a position below the front eaves 73, and a reflection member 76, formed in the rear of the opening 75, which has a back side reflecting surface 76a and a lower side reflecting surface 76b to reflect the bulb light of the position light bulb 62 and guide the bulb light to the outside.

As shown in Figs. 2, 3, 5 and 6, the first side transparent member 81 has an opening 83 having an approximate triangular shape in a front view, and a reflection member 84, formed in the rear of the opening 83, which has inwardly-curved upper and lower reflecting surfaces 84a and 84b to reflect the bulb light of the position light bulb 62 and guide the bulb light to the outside.

As shown in Figs. 2, 3, 5 and 6, the second side transparent member 82 has an opening 85 having an approximate triangular shape in a front view, and a reflection member 86, formed in the rear of the opening 83, which has inwardly-curved upper and lower reflecting surfaces 86a and 86b to reflect the bulb light of the position light bulb 62 and guide the bulb light to the outside.

In the head light device 50 having the above-described structure, as shown in Figs. 3, 5 and 6, the bulb light of the position light bulb 62 is reflected with respective reflection members 76, 84 and 86 of the upper transparent member 74 in the extension 70, the first side transparent members 81 and the second side transparent members 82, and guided via the respective openings 75, 83 and 85 to the outside.
Then the position light bulb 62, with the front eaves 73, cannot be directly seen from the outside. Note that the arrows in the figures show an example of bulb light of the position light bulb 62.

As described above, according to the head light device 50 in the present example, as the extension 70 covers the position in front of the position light bulb 62, and the extension 70 is provided with the openings 75, 83 and 85 and the reflection members 76, 84 and 86 to guide the bulb light of the position light bulb 62 to the outside, the position light bulb 62 cannot be directly seen from the outside, thereby the outer appearance of the position light in the motorcycle 10 upon turning-on and turning-off of the position light can be improved, and a distinction between the outer appearance upon turning-on of the head light and that upon turning-on of the position light can be easily made, and a distinction between the outer appearance upon turning-on of the head light and that upon turning-on of the position light can be easily made. Further, as the openings 75, 83 and 85 and the reflection members 76, 84 and 86 can be provided in arbitrary positions of the extension 70, the outer appearance upon turning-on of the position light can be arbitrarily set, especially, the outer appearance upon turning-on of the position light can be arbitrarily set, thereby the outer appearance of the position light in the motorcycle 10 can be improved.

Further, according to the head light device 50 of the present example, as the position light bulb 62 is provided above the head light bulb 61, the front eaves 73 covering the position in front of the position light bulb 62 is provided in the extension 70, and the upper transparent member 74 having the opening 75 and the reflection member 76 to guide the bulb light of the position light bulb 62 to the outside is provided below the front eaves 73, the position light bulb 62 cannot be directly seen from the outside, thereby the outer appearance of the position light in the motorcycle 10 upon turning-on and turning-off of the position light can be improved, and a distinction between the outer appearance upon turning-on of the head light and that upon turning-on of the position light can be easily made. Further, as the upper transparent member 74 can be provided in an arbitrary position of the extension 70, the outer appearance upon turning-on of the position light can be arbitrarily set, and the outer appearance of the position light in the motorcycle 10 can be improved. Especially, in a naked type motorcycle without cowl around the head light device 50, as the space between the head light device 50 and the meter 36 is visible, the position light can be integrally provided above the head light device 50, and the space between the head light device and the meter 36 can be filled. Further, by the light-guide opening for the position light, an individual-styled light emission image which compensates the absence of cowl can be produced about the front part of such naked type motorcycle.

Further, according to the head light device 50 of the present example, as the front eaves 73 is formed at a one-step lower level than the surface of the extension 70, transmission of the head of the position light bulb 62 via the front eaves 73 to the lens 52 can be suppressed.

Further, according to the head light device 50 of the present example, as the first side transparent member 81 and the second side transparent member 82 having the openings 83 and 85 and the reflection members 84 and 86 to guide the bulb light of the position light bulb 62 to the outside are provided on the sides of the front eaves 73, it seems like plural position lights exist, and the outer appearance of the position light in the motorcycle 10 can be improved.

Further, according to the head light device 50 of the present example, as the first side transparent member 81 and the second side transparent member 82 are concave members having an approximate triangular shape in a front view, and their reflection members 84 and 86 have the inwardly curved upper reflecting surfaces 84a and 86a and lower reflecting surfaces 84b and 86b, the bulb light of the position light bulb 62 can be efficiently reflected, and the outer appearance of the position light in the motorcycle 10 can be improved.

Further, according to the head light device 50 of the present example, as the first side transparent members 81 and second side transparent members 82 are provided in plural positions on one side of the extension 70 in the circumferential direction with the head light bulb 61 as a center, it seems like plural position lights exist, and the outer appearance of the position light in the motorcycle 10 can be improved.

Further, according to the head light device 50 of the present example, as the extension 70 has the upper extension 71 covering the position above the reflector 53 and the side extensions 72 extending downward from the sides of the upper extension 71, it can efficiently cover the perimeter of the reflector 53.

Further, according to the head light device 50 of the present example, as the position light bulb 62 and the extension 70 are attached to the head light housing 51, the head light bulb 61 is attached to the reflector 53, and the reflector 53 is swingably supported with the head light housing 51 via the aiming device 55, the light axis of the head light bulb 61 can be adjusted.

Note that the present invention is not limited to the above-described example, but can be arbitrarily changed within a range not departing from the subject matter of the present invention.
For example, in the above-described example, the head light device of the present invention is mounted in a motorcycle, however, the invention is not limited to this example, but the head light device of the present invention may be mounted in various saddle-ride vehicles such as an ATV.
10... motorcycle
50 ... head light device
51 ... head light housing
52 ... lens
53 ... reflector
54 ... side cover
55 ... aiming device
61 ... head light bulb
62 ... position light bulb
70 ... extension
71 ... upper extension
72 ... side extension
73 ... front eaves
74... upper transparent member
75 ... opening
76 ... reflection member
81 ... first side transparent member
82 ... second side transparent member
83, 85 ... opening
84, 86 ... reflection member

## Claims

1. A motorcycle (10) head light device (50) comprising:
a head light bulb (61) ;
a position light bulb (62) provided around the head light bulb;
a reflector (53) that reflects bulb light of the head light bulb; and
an extension (70) covering the perimeter of the reflector,
**characterized in that**
the extension (70) is adapted to cover a position in front of the position light bulb (62),
and wherein the extension is provided with openings (75, 83, 85) and reflection members (76, 84, 86) that can guide the bulb light of the position light bulb to the outside.

2. The motorcycle head light device according to claim 1, wherein the position light bulb (62) is provided above the head light bulb (61),
and wherein the extension (70) is provided with a front eaves (73) that is adapted to cover the position in front of the position light bulb,
further wherein an upper transparent member (74) having the opening (75) and the reflection member (76) that guide the bulb light of the position light bulb to the outside is provided below the front eaves.

3. The motorcycle head light device according to claim 2, wherein the front eaves (73) is formed at a one-step lower level than the surface of the extension (70).

4. The motorcycle head light device according to any one of claims 1 to 3, wherein side transparent members (81, 82) having the openings (83, 85) and the reflection members (84, 86) that can guide the bulb light of the position light bulb (62) to the outside are provided on the sides of the front eaves (73).

5. The motorcycle head light device according to claim 4, wherein the side transparent members (81, 82) are concave members having an approximate triangular shape in a front view,
and wherein the reflection members (84, 86) of the side transparent members have inwardly curved upper and lower surfaces (84a, 84b, 86a, 86b).

6. The motorcycle head light device according to claim 4 or 5, wherein the side transparent members (81, 82) are provided in a plurality of positions on one side of the extension (70) in a circumferential direction with the head light bulb (61) as a center.

7. The motorcycle head light device according any one of claims 1 to 6, wherein the extension (70) has an upper extension (71) covering a position above the reflector (53) and a side extension (72) extending downward from a side of the upper extension.

8. The motorcycle head light device according to any one of claims 1 to 7, wherein the position light bulb (62) and the extension (70) are attached to the head light housing (51),
and wherein the head light bulb (61) is attached to the reflector (53),
further wherein the reflector is swingably supported with the head light housing.

## Patentansprüche

1. Scheinwerfervorrichtung (50) eines Motorrads (10) aufweisend:
eine Scheinwerferglühbirne (61);
eine Positionsleuchtenglühbirne (62), die um die Scheinwerferglühbirne angeordnet ist;
einen Reflektor (53), der Glühbirnenlicht der Glühbirne des Scheinwerfers reflektiert; und
eine Verlängerung (70), die den Umfang des Reflektors abdeckt,
**dadurch gekennzeichnet, dass**
die Verlängerung (70) eingerichtet ist eine Stelle vor der Positionsleuchtenglühbirne (62) abzudecken,
und wobei die Verlängerung mit Öffnungen (75, 83, 85) und Reflektionselementen (76, 84, 86) versehen ist, die das Glühbirnenlicht der Positionsleuchtenglühbirne nach außen führen können.

2. Scheinwerfervorrichtung eines Motorrads gemäß Anspruch 1, wobei die Positionsleuchtenglühbirne (62) oberhalb der Scheinwerferglühbirne (61) angeordnet ist,
und wobei die Verlängerung (70) mit einem vorderen Überhang (73) versehen ist, der eingerichtet ist eine Stelle vor der Positionsleuchtenglühbirne abzudecken,
wobei weiterhin ein oberes transparentes Element (74) unterhalb des vorderen Überhangs vorgesehen ist, wobei das obere transparente Element (64) eine Öffnung (75) und das Reflektionselement (66) hat, die das Glühbirnenlicht der Positionsleuchtenglühbirne nach außen führen.

3. Scheinwerfervorrichtung eines Motorrads gemäß Anspruch 2, wobei der vordere Überhang (73) an einer eine Ebene niedrigeren Ebene als die Oberfläche der Verlängerung (70) ausgebildet ist.

4. Scheinwerfervorrichtung eines Motorrads nach irgendeinem der Ansprüche 1 bis 3, wobei transparente Seitenelemente (81, 82), die Öffnungen (83, 85) und die Reflektionselemente (84, 86) haben, die das Glühbirnenlicht der Positionsleuchtenglühbirne (62) nach außen führen, an den Seiten des vorderen Überhangs (73) angeordnet sind.

5. Scheinwerfervorrichtung eines Motorrads nach Anspruch 4, wobei die transparenten Seitenelemente (81, 82) konkave Elemente sind, die ungefähr eine dreieckige Form in einer Vorderansicht haben,
und wobei die Reflektionselemente (84, 86) der transparenten Seitenelemente nach innen gekrümmte obere und untere Flächen (84a, 84b, 86a, 86b) haben.

6. Scheinwerfervorrichtung eines Motorrads nach Anspruch 4 oder 5, wobei die transparenten Seitenelemente (81, 82) an einer Mehrzahl von Stellen auf einer Seite der Verlängerung (70) in einer Umfangsrichtung angeordnet sind, mit der Scheinwerferglühbirne (61) als Mittelpunkt.

7. Scheinwerfervorrichtung eines Motorrads nach einem der Ansprüche 1 bis 6, wobei die Verlängerung (70) eine obere Verlängerung (71) hat, die eine Stelle oberhalb des Reflektors bedeckt, und eine seitliche Verlängerung (72), die sich von einer Seite der oberen Verlängerung nach unten erstreckt.

8. Scheinwerfervorrichtung eines Motorrads nach einem der Ansprüche 1 bis 7, wobei die Positionsleuchtenglühbirne (62) und die Verlängerung (70) an dem Scheinwerfergehäuse (51) befestigt sind,
und wobei die Scheinwerferglühbirne (61) an dem Reflektor (53) befestigt ist,
wobei weiterhin der Reflektor in dem Scheinwerfergehäuse drehbar getragen ist.

## Revendications

1. Dispositif de phare avant (50) de motocyclette (10) comprenant :
une ampoule de phare avant (61) ;
une ampoule de feu de position (62) prévue autour de l'ampoule de phare avant ;
un réflecteur (53) qui réfléchit la lumière d'ampoule de l'ampoule de phare avant ; et
une extension (70) couvrant le périmètre du réflecteur,
**caractérisé en ce que**
l'extension (70) est conçue pour couvrir une position à l'avant de l'ampoule de feu de position (62),
et dans lequel l'extension est pourvue d'ouvertures (75, 83, 85) et d'éléments de réflexion (76, 84, 86) qui peuvent guider la lumière d'ampoule de l'ampoule de feu de position vers l'extérieur.

2. Dispositif de phare avant de motocyclette selon la revendication 1, dans lequel l'ampoule de feu de position (62) est prévue au-dessus de l'ampoule de phare avant (61),
et dans lequel l'extension (70) est pourvue d'une avancée avant (73) qui est conçue pour couvrir la position à l'avant de l'ampoule de feu de position,
dans lequel en outre un élément transparent supérieur (74) comportant l'ouverture (75) et l'élément de réflexion (76) qui guident la lumière d'ampoule de l'ampoule de feu de position vers l'extérieur est prévu au-dessous de l'avancée avant.

3. Dispositif de phare avant de motocyclette selon la revendication 2, dans lequel l'avancée avant (73) est formée à un niveau à un étage plus bas que la surface de l'extension (70).

4. Dispositif de phare avant de motocyclette selon l'une quelconque des revendications 1 à 3, dans lequel des éléments transparents latéraux (81, 82) comportant les ouvertures (83, 85) et les éléments de réflexion (84, 86) qui peuvent guider la lumière d'ampoule de l'ampoule de feu de position (62) vers l'extérieur sont prévus sur les côtés de l'avancée avant (73).

5. Dispositif de phare avant de motocyclette selon la revendication 4, dans lequel les éléments transparents latéraux (81, 82) sont des éléments concaves ayant une forme approximativement triangulaire en vue de face,
et dans lequel les éléments de réflexion (84, 86) des éléments transparents latéraux ont des surfaces supérieure et inférieure incurvées vers l'intérieur (84a, 84b, 86a, 86b).

6. Dispositif de phare avant de motocyclette selon la revendication 4 ou 5, dans lequel les éléments transparents latéraux (81, 82) sont prévus à une pluralité de positions d'un côté de l'extension (70) dans une direction circonférentielle avec l'ampoule de phare avant (61) en tant que centre.

7. Dispositif de phare avant de motocyclette selon l'une quelconque des revendications 1 à 6, dans lequel l'extension (70) comporte une extension supérieure (71) couvrant une position au-dessus du réflecteur (53) et une extension latérale (72) s'étendant vers le bas à partir d'un côté de l'extension supérieure.

8. Dispositif de phare avant de motocyclette selon l'une quelconque des revendications 1 à 7, dans lequel l'ampoule de feu de position (62) et l'extension (70) sont attachées au logement de phare avant (51),
et dans lequel l'ampoule de phare avant (61) est attachée au réflecteur (53),
dans lequel en outre le réflecteur est supporté de manière basculante avec le logement de phare avant.
